# EUROPÄISCHE PATENTSCHRIFT

(11) **EP 1 148 253 B1**
(45) Veröffentlichungstag und Bekanntmachung des Hinweises auf die Patenterteilung: **08.12.2004**
(21) Anmeldenummer: 01890026.6
(22) Anmeldetag: 31.01.2001
(51) Int. Cl.: F15B 15/14, F15B 15/04, E05F 15/02

(54) **Betätigungsanordnung für bewegbare Teile an Fahrzeugen**
Actuating device for movable parts of automotive vehicles
Dispositif d'actionnement de pièces mobiles de véhicules automobiles

(30) Priorität: 23.03.2000 AT 5032000
(43) Veröffentlichungstag der Anmeldung: 24.10.2001
(73) Patentinhaber: Hoerbiger Hydraulik GmbH, 86956 Schongau (DE)
(72) Erfinder: Huber, Gerhard, 87662 Frankenhofen (DE); Schweiger, Klaus, 86989 Steingaden (DE)
(74) Vertreter: Laminger, Norbert, Mag.

(56) Entgegenhaltungen:
- WO-A-99/39127
- GB-A- 205 450
- US-A- 4 718 330
- US-A- 5 117 741

## Beschreibung

Die Erfindung betrifft eine Betätigungsanordnung für bewegbare Teile an Fahrzeugen, insbesonders für Heck- oder Motorraumdeckel, Türen, Verdecke und Verdeckklappen, umfassend zumindest einen schwenkbar über einen zylindrischen Zapfen am Fahrzeug und/oder dem bewegbaren Teil angelenkten Druckmittelzylinder mit zumindest einer Leitung für das Druckmittel in zumindest einen Arbeitsraum des Druckmittelzylinders, wobei ein Abschnitt jeder Leitung für das Druckmittel den Zapfen im wesentlichen axial durchsetzt und auf der dem Druckmittelzylinder entgegengesetzten Seite in zumindest einen im wesentlichen radialen Kanal übergeht, welcher in zumindest einer sich zumindest über einen Teil des Umfanges des Zapfens erstreckenden Nut mündet, und wobei vom Zapfen zumindest eine Passage zu zumindest einem Arbeitsraum des Druckmittelzylinders ausgeht.

Druckmittelzylinder, speziell in der Anwendung in Kraftfahrzeugen, haben einen Anschluß für das Druckmedium an Stangen- und/oder Bodenseite, an welchen die Zuleitungen des Druckmediums, meist Schläuche, befestigt werden. Im Zuge der Bewegung des durch den Druckmittelzylinder betätigten Fahrzeugteils wird auch der Druckmittelzylinder verschwenkt. Dabei besteht einerseits die Gefahr, dass die Schläuche geknickt werden, was zu Störungen der Versorgung des Druckmittelzylinders und zu Beschädigung der Schläuche selbst führen kann. Dieser Gefahr könnte durch große Schlauchbögen begegnet werden, was aber den Anforderungen des geringstmöglichen Platzbedarfes entgegensteht. Auch sind die Schläuche bei den Kfz-Anwendungen oftmals im Außenbereich verlegt, so dass sie auch dadurch der Gefahr der Beschädigung ausgesetzt sind.

Eine Betätigungsanordnung wie eingangs beschrieben ist beispielsweise in der US 4 718 330 A geoffenbart und umfasst zumindest einen schwenkbar über einen separaten zylindrischen Zapfen angelenkten Druckmittelzylinder mit zumindest einer Leitung für das Druckmittel in zumindest einen Arbeitsraum des Druckmittelzylinders, wobei ein Abschnitt jeder Leitung für das Druckmittel den mit dem Druckmittelzylinder drehfest verbundenen Zapfen im wesentlichen axial durchsetzt und vom Zapfen zumindest eine Passage zu zumindest einem Arbeitsraum des Druckmittelzylinders ausgeht. Die Druckmittelleitungen von den externen Anschlüssen gehen von entgegengesetzten Seiten unmittelbar in axiale Passagen im Zapfen über.

Auch das in der WO 99/39127 A geoffenbarte System umfasst zumindest einen schwenkbar über einen wiederum separaten zylindrischen Zapfen angelenkten Druckmittelzylinder. Die Druckmittelleitungen von den externen Anschlüssen gehen zwar von der gleichen Seite aus und in axiale Passagen im Zapfen über, doch durchläuft eine Passage die gesamte Länge des Zapfens und tritt an der gegenüberliegenden Seite aus. Von dort wird sie über eine Zusatzanordnung in einen Arbeitsraum des Zylinders weitergeführt.

In der GB 205 450 A ist eine schwenkbare Anlenkung des Arbeitszylinders über eine Kugel am unteren Ende des Zylinders beschrieben, in welcher Kugel keine Nut ausgearbeitet, sondern eine Kalotte weggeschnitten, ist.

Schließlich zeigt auch die US 5 117 741 A keinen der Lagerung des Arbeitszylinders dienenden Zapfen, sondern zwei in Sackbohrungen im Zylinderboden einführbare Lagerbolzen, von welchen die Anlenk- und Betätigungskräfte aufgenommen und auf die Tragestruktur übertragen werden. Die Druckmittelleitungen verlaufen im Zylinderboden über einen gewisse Distanz axial zur Schwenkachse, d.h. zu den Lagerbolzen, doch ist ohne in eine von gegenüber dem Arbeitszylinder zugängliche Nut überzugehen.

Die Aufgabe der vorliegenden Erfindung war daher eine mechanisch stabile Anordnung, welche bei geringem Platzbedarf und Beschädigungsgefahr der Druckmittelleitungen eine Verschwenkung des Druckmittelzylinders um prinzipiell beliebige Winkel gestattet.

Diese Aufgabe wird erfindungsgemäß dadurch gelöst, dass der Zapfen mit dem Druckmittelzylinder drehfest verbunden ist, und die mit der zumindest einen Nut versehene Seite des Zapfens mit einer den Zapfen umgreifenden Druckmittel-Anschlußbuchse verbindbar ist. Mit dieser durch den Zapfen gebildeten Drehdurchführung eines Abschnittes der Druckmittelleitungen durch den Anlenkpunkt des Arbeitszylinders kann der beliebig verschwenkbare Zylinder mit dem Druckmittel versorgt werden, ohne dass sich die vorgeschalteten Leitungsabschnitte mit dem Zylinder mitbewegen müssen und abgeknickt werden können oder die Beweglichkeit des Druckmittelzylinders beschränken. Die bis zum Zapfen hin geführten Leitungsabschnitte können im wesentlichen fix und innerhalb beispielsweise der Karosserie des Fahrzeuges geschützt montiert werden, so dass die Gefahr einer Beschädigung bei der Verschwenkung oder durch äußere Einflüsse minimiert ist. Dabei ist vorteilhafterweise der mechanisch am meisten belastete Abschnitt, nämlich jener des Übergangs zwischen dem Zapfen und der Haltestruktur am Fahrzeug, besonders stabil und sicher vor Druckmittelverlusten in diesem Bereich ausgeführt. Der den Übertritt des Druckmittels gestattende Übergang von den fix angeordneten Leitungen in den relativ dazu verdrehbaren Zapfen erfolgt im geschützten Bereich auf der dem Druckmittelzylinder gegenüberliegenden Seite der Haltestruktur.

Vorteilhafterweise wird der Übertritt des Druckmittels vom feststehenden Zapfen in den Druckmittelzylinder dadurch bewerkstelligt, dass sich zumindest eine Nut über den gesamten Umfang des Zapfens erstreckt. Damit ist die größtmögliche Verschwenkbarkeit des Druckmittelzylinders erreicht, da in jeder beliebigen Winkelstellung ein Übertrittsmöglichkeit für das Druckmittel vom Zapfen in den Druckmittelzylinder gegeben ist. Selbstverständlich sind für beschränkt notwendige Schwenkwinkel auch Nuten über geringere Umfangsabschnitte des Zapfens möglich.

Gemäß einer ersten Ausführungsform kann dabei zumindest eine Nut allein im Zapfen ausgebildet sein, der durch seine Abmessungen ohne mechanische Schwächung die Nut an seiner äußeren Oberfläche aufnehmen kann, welche Oberfläche auch leicht zur Bearbeitung zugänglich ist.

Um gewisse Bewegungen und Schräglagen der Zylinderachse des Druckmittelzylinders zu ermöglichen, ist gemäß einem weiteren Merkmal der Erfindung vorgesehen, dass der Druckmittelzylinder über den Zapfen in einer Haltestruktur um zumindest eine beliebige, schräg zur Achse des Zapfens orientierte, Achse beweglich gelagert und gehalten ist.

In baulich einfacher Weise kann dazu vorgesehen sein, dass zwischen Zapfen und Haltestruktur ein Elastomer-Lager eingesetzt ist.

Eine stabilere Führung bei den Schräglage-Bewegungen der Zylinderachse ist aber gegeben, wenn gemäß einer weiteren Ausführungsform das in der Haltestruktur aufgenommene Teilstück des Zapfens eine zumindest teilweise sphärische Oberfläche aufweist und der aufnehmende Bereich der Haltestruktur komplementär dazu ausgebildet ist.

Gemäß einem weiteren Merkmal der Erfindung ist vorgesehen, dass der Zapfen in einer Buchse mit einer zumindest teilweise sphärische Oberfläche gelagert ist und der aufnehmende Bereich der Haltestruktur komplementär zur Oberfläche der Buchse ausgebildet ist. Mit dieser Konstruktion kann auch bei der mechanisch am besonders stabilen Ausführung mit am Druckmittelzylinder fest angebrachten Zapfen gewährleistet werden, dass die Bewegungen und Schräglagen der Zylinderachse des Druckmittelzylinders um zumindest eine beliebige, schräg zur Achse des Zapfens orientierte Achse möglich sind.

Typischerweise sind die Betätigungsanordnungen im Kfz-Bereich mit einem doppelt-wirkenden Druckmittelzylinder ausgestattet, der die Bewegung des bewegten Fahrzeugteils in beiden Richtungen bewirkt. Für derartige Anordnungen ist erfindungsgemäß vorgesehen, dass zumindest zwei Leitungen für das Druckmittel den Zapfen im wesentlichen axial durchsetzen und in zumindest je einen im wesentlichen radialen Kanal übergehen, welcher in zumindest einer sich zumindest über einen Teil des Umfanges des Zapfens erstreckenden Nut pro Leitung mündet.

Um auch dabei weiter Bauraum zu sparen und die Beschädigungsgefahr für die Druckmittelleitungen so weit als möglich zu mindern, ist gemäß einem weiteren Erfindungsmerkmal vorgesehen, dass die Passage zu dem Arbeitsraum des Druckmittelzylinders, der dem Zapfen abgewandt liegt, durch das Innere des Druckmittelzylinders geführt ist.

Vorteilhafterweise wird dies gemäß einer speziellen Ausführungsform der Erfindung dadurch bewerkstelligt, dass der Druckmittelzylinder als Doppelrohr-Zylinder ausgeführt ist, und die Passage zu dem Arbeitsraum des Druckmittelzylinders, der dem Zapfen abgewandt liegt, durch den ringförmigen Raum zwischen den beiden Rohren des Druckmittelzylinders gebildet ist.

Vorteilhafterweise kann bei allen der oben genannten Ausführungsformen vorgesehen sein, dass parallel zu dem oder jedem Druckmittelzylinder zumindest ein weiteres Bauteil, vorzugsweise eine Gasfeder, angebracht ist, von welchem ein Enden mit dem Abschnitt des Druckmittelzylinders verbunden ist, der den Zapfen umfasst, und das andere Ende mit der Kolbenstange des Druckmittelzylinders gekoppelt ist. Damit können die meist ohnehin in Kombination am bewegten Fahrzeugteil angreifenden Bauelemente vorteilhaft zusammengefasst werden und die konstruktiven Eingriffe an der Fahrzeugkonstruktion bleiben so gering als möglich.

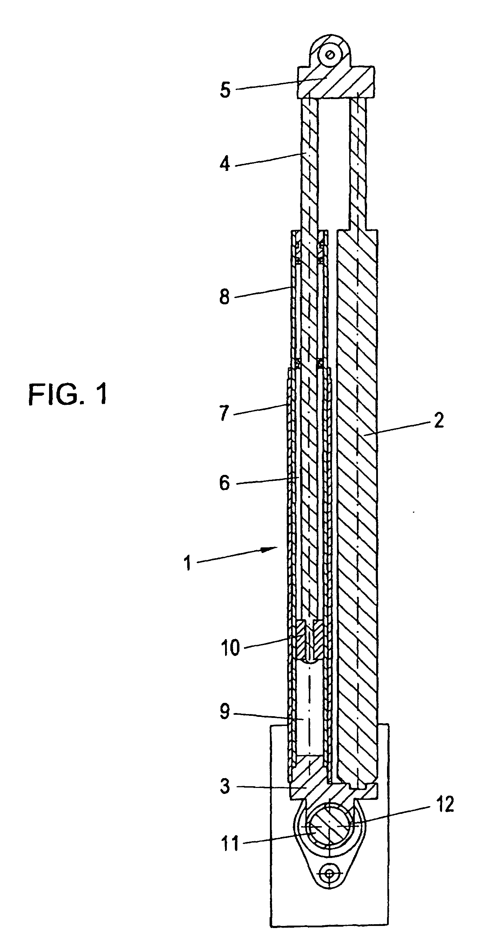

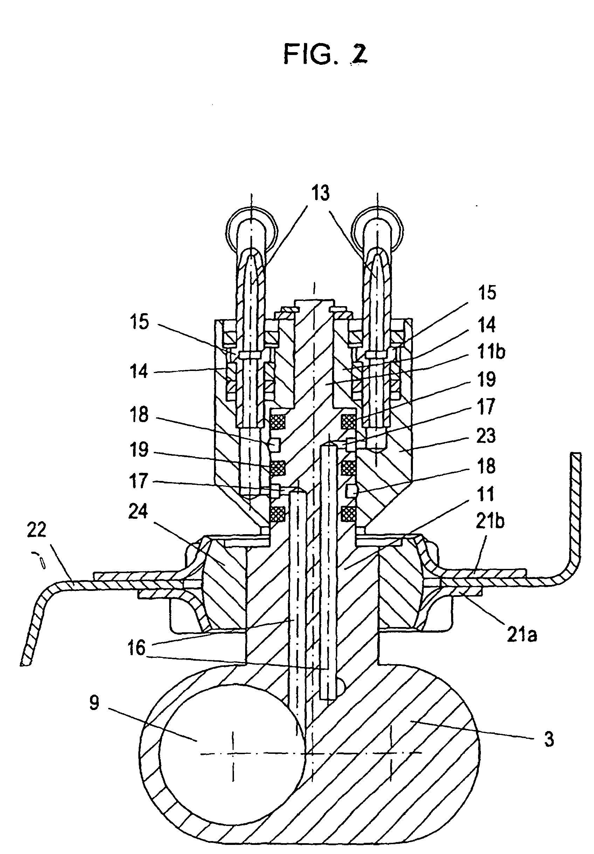

In der nachfolgenden Beschreibung soll die Erfindung anhand spezieller Ausführungsbeispiele, wie in den beigefügten Zeichnungen dargestellt, näher erläutert werden. Dabei zeigt die Fig. 1 einen Längsschnitt durch eine erfindungsgemäße Anordnung, bestehend aus einem doppelt-wirkenden Hydraulikzylinder und einer Gasfeder, und Fig. 2 ist ein Längsschnitt im Bereich des Zapfens der erfindungsgemäßen Drehdurchführung mit sphärischer Lagerung.

Die in Fig. 1 dargestellte Betätigungsanordnung für bewegbare Teile an Fahrzeugen, insbesonders für Heck- oder Motorraumdeckel, Türen, Verdecke und Verdeckklappen, besteht aus einem doppelt-wirkenden hydraulischen Arbeitszylinder 1, der in dieser beispielhaften Ausführungsform mit einem weiteren Bauteil gekoppelt ist, hier eben einer Gasfeder 2, deren Einzelheiten als nicht zur Erfindung gehörig nicht näher dargestellt sind. Vorteilhafterweise ist die Verbindung der beiden Bauteile 1, 2 dadurch bewerkstelligt, dass ein Ende der Gasfeder mit dem Boden 3 des Arbeitszylinders 1 verbunden ist, das andere Ende mit der Kolbenstange 4 gekoppelt ist, vorteilhafterweise über ein Joch 5, welches auch der Anbindung der Anordnung an den zu bewegenden Bauteil des Fahrzeugs erlaubt.

Um den Platzbedarf für die Anordnung 1, 2 und auch die Beschädigungsgefahr zu minimieren, ist der Arbeitszylinder 1 als Doppelrohr-Zylinder ausgeführt und die Passage zu dem Arbeitsraum 6 des Arbeitszylinders 1, der Boden 3 abgewandt liegt, durch den ringförmigen Raum zwischen den beiden Rohren 7, 8 des Zylinders 1 gebildet ist. Der gegenüberliegende Arbeitsraum 9, durch den Kolben 10 des Arbeitszylinders 1 vom ersten Arbeitsraum getrennt und sich unmittelbar dem Boden 3 anschließend, wird vorteilhafterweise direkt über eine Passage im Boden 3 mit dem Druckmittel, hier dem Hydrauliköl, versorgt.

Der Arbeitszylinder 1, und auch die am Boden 3 mit einem ihrer Ende befestigte Gasfeder 2, sind gemeinsam mit einem zylindrischen Zapfen 11 versehen und über diesen Zapfen 11 am Fahrzeug, alternativ allenfalls am bewegbaren Teil des Fahrzeugs, angelenkt. Wie nachfolgend näher erläutert wird, sind die Leitungen für das Druckmittel in die Arbeitsräume 6, 9 des Arbeitszylinders 1 durch diesen der schwenkbaren Anbringung dienenden Zapfen 11 hindurch und weiter in den Boden 3 des Arbeitszylinders 1 geführt, wodurch extern geführte und knick- sowie beschädigungsgefährdete Leitungen vermieden werden können.

Da der Zapfen 11, wie in Fig. 2 deutlicher zu erkennen ist, fest mit dem Boden 3 des Druckmittelzylinders 1 verbunden ist, vorzugsweise einstückig damit ausgeführt ist, ergibt sich eine besonders stabile Konstruktion im mechanisch sehr beanspruchten Abschnitt des Übergangs vom Druckmittelzylinder zum Zapfen. Die den Zapfen 11 axial durchsetzenden Leitungsabschnitte 16 gehen vorzugsweise unmittelbar in den bodenseitigen Arbeitsraum 9 bzw. die Passage zum gegenüberliegenden Arbeitsraum 6 des Arbeitszylinders 1 über.

Auf der dem Arbeitszylinder 1 gegenüberliegenden Seite des Zapfens 11 weist dieser eine Verlängerung 11b auf, welche zur vorteilhafterweise lösbaren Ankopplung einer allein mit dem Zapfen 11 verbundenen und diesen umgreifenden Druckmittel-Anschlußbuchse 23 ausgelegt ist. In dieser Anschlußbuchse 23 sind vorteilhafterweise wiederum zwei Anschluß-Ausnehmungen 14 in axialer Orientierung vorgesehen, welche die Enden von den zwei Druckmitteilleitungen 13 aufnehmen. Um den Zapfen 11 relativ zu den im wesentlichen fixen Druckmittelleitungen 13 verdrehbar zu machen, sind zwischen der Druckmittel-Anschlußbuchse 23 und der Verlängerung 11b des Zapfens 11 die Nuten 18 und Dichtungen 19 vorgesehen.

Ausgehend von den Arbeitsräumen 6, 9 des Arbeitszylinders 1 ist für jede Druckmittelleitung zumindest je ein Abschnitt 16 vorgesehen, der den Zapfen 11 im wesentlichen axial durchsetzt und in zumindest einen im wesentlichen radialen Kanal 17 übergeht. An zumindest einer Stelle mündet dieser Kanal 17 in zumindest eine sich zumindest über einen Teil des Umfanges des Zapfens 11 erstreckenden Nut 18. Je größer der Winkelbereich ist, den die Nut 18 überdeckt, um so größer ist auch der Schwenkbereich des Arbeitszylinders 1 relativ zur Druckmittel-Anschlußbuchse 23. Vorteilhafterweise überdeckt die Nut 18 den gesamten Umfang des Zapfens 11, d.h. erlaubt die relative Verschwenkung um 360°.

Neben der beweglichen Lagerung des Zapfens 11 in der Haltestruktur am Fahrzeug über beispielsweise Elastomer-Lager oder einen Zapfen 11 mit zumindest teilweise sphärischer Oberfläche eines seiner Teilabschnitte ist eine weitere Möglichkeit gegeben und in Fig. 2 dargestellt, mit welcher eine gewisse Beweglichkeit und Schräglage der Zylinderachse des Druckmittelzylinders um zumindest eine beliebige, schräg zur Achse des Zapfens orientierte Achse realisiert werden kann. Dazu ist der Zapfen 11 mit seinem mittleren Abschnitt in einer Lagerbuchse 24 vorzugsweise drehbar gelagert, welche Lagerbuchse 24 eine zumindest teilweise sphärische Oberfläche aufweist. Diese Lagerbuchse 24 wieder ist zwischen den Lagerschalen 21a und 21b um eine zur Achse des Zapfens 11 schräge Achse verschwenkbar gehalten, welche Lagerschalen 21a und 21b mit dem den Zapfen 11 tragenden Teil 22 des Fahrzeugs verbunden sein können.

In einem Elastomer-Lager könnte der Zapfen 11 drehfest gehalten sein, was eine zumindest beschränkte Bewegung der Betätigungsanordnung 1, 2 um zumindest eine beliebige, schräg zur Achse des Zapfens 11 orientierte Achse gestattet. Das Elastomer-Lager seinerseits ist dabei ebenfalls drehfest in einer Lagerschale fixiert, die an einem Teil des Fahrzeugs, beispielsweise mittels Schrauben, angebracht ist. Die Betätigungsanordnung 1, 3 kann auch an einem Zapfen 11 verschwenkbar angelenkt sein, der in einer sphärischen Lagerung gehalten ist, bestehend etwa aus zwei einander zugewandten Schalen, deren innere Oberfläche einen Teil einer Kugeloberfläche darstellt. In dem besagten Bereich zwischen diesen Lagerschalen ist ein Teilstück des Zapfens 11 aufgenommen, welches Teilstück eine zumindest teilweise sphärische Oberfläche aufweist, komplementär zur Lagerschale ausgebildet.

Obwohl die Betätigungsanordnung in der obigen Beschreibung für die typischerweise Anwendung findende Ausführungsform mit einem doppelt-wirkenden Druckmittelzylinder 1 beschrieben ist, wobei zumindest zwei Leitungen 13 für das Druckmittel vorgesehen sind und daher auch zumindest zwei den Zapfen 11 im wesentlichen axial durchsetzende Abschnitte 16 vorgesehen sind, ist die erfindungsgemäße Drehdurchführung auch für einfachwirkende Zylinder mit entsprechend nur einer Leitung 13, einem axial durch den Zapfen 11 geführten und in einen Arbeitsraum 6 oder 9 weitergeführten Passage in sinngemäßer Weise anwendbar. Auch sind pro Arbeitsraum mehrere Zuleitungen oder axiale Kanäle 16 bzw. radial Kanäle 17 und/oder Nuten 18 möglich.

Große Querschnitte der Nuten 18 können dagegen erreicht werden, wenn gemäß einer altemativen Ausführungsform, die nicht in den Zeichnungen dargestellt ist, zumindest eine Nut durch gegenüberliegende Ausnehmungen sowohl im Zapfen 11 als auch in der Druckmittel-Anschlußbuchse 23 ausgebildet ist, welche den Zapfen 11 umgreift. Falls der Zapfen 11 beispielsweise sehr dünn gehalten werden muss und die Ausarbeitung einer Nut zu einer mechanischen Schwächung führen könnte, kann - ebenfalls in den Zeichnungen nicht gezeigt - vorgesehen sein, dass zumindest eine Nut allein in der Druckmittel-Anschlußbuchse 23 ausgearbeitet ist.

## Patentansprüche

1. Betätigungsanordnung für bewegbare Teile an Fahrzeugen, insbesonders für Heck- oder Motorraumdeckel, Türen, Verdecke und Verdeckklappen, umfassend zumindest einen schwenkbar über einen zylindrischen Zapfen am Fahrzeug und/oder dem bewegbaren Teil angelenkten Druckmittelzylinder mit zumindest einer Leitung für das Druckmittel in zumindest einen Arbeitsraum des Druckmittelzylinders, wobei ein Abschnitt (16) jeder Leitung (13) für das Druckmittel den Zapfen (11) im wesentlichen axial durchsetzt und auf der dem Druckmittelzylinder (1) entgegengesetzten Seite in zumindest einen im wesentlichen radialen Kanal (17) übergeht, weicher in zumindest einer sich zumindest über einen Teil des Umfanges des Zapfens (11) erstreckenden Nut (18) mündet, und wobei vom Zapfen (11) zumindest eine Passage zu zumindest einem Arbeitsraum (6, 9) des Druckmittelzylinders (1) ausgeht, **dadurch gekennzeichnet, dass** der Zapfen (11) mit dem Druckmittelzylinder (1) drehfest verbunden ist, und die mit der zumindest einen Nut (18) versehene Seite (11a) des Zapfens (11) mit einer den Zapfen (11) umgreifenden Druckmittel-Anschlußbuchse (23) verbindbar ist.

2. Betätigungsanordnung nach Anspruch 1, **dadurch gekennzeichnet, dass** sich zumindest eine Nut (18) über den gesamten Umfang des Zapfens (11) erstreckt.

3. Betätigungsanordnung nach Anspruch 1 oder 2, **dadurch gekennzeichnet, dass** zumindest eine Nut (18) allein im Zapfen (11) ausgebildet ist.

4. Betätigungsanordnung nach zumindest einem der vorhergehenden Ansprüche, **dadurch gekennzeichnet, dass** der Zapfen (11) in einer Haltestruktur (21, 21a, 21b, 22) um zumindest eine beliebige, schräg zur Achse des Zapfens (11) orientierte Achse beweglich gelagert und gehalten ist.

5. Betätigungsanordnung nach Anspruch 4, **dadurch gekennzeichnet, dass** zwischen Zapfen (11) und Haltestruktur (21, 22) ein Elastomer-Lager (20) eingesetzt ist.

6. Betätigungsanordnung nach Anspruch 4, **dadurch gekennzeichnet, dass** das in der Haltestruktur (21a, 21b) aufgenommene Teilstück des Zapfens (11) eine zumindest teilweise sphärische Oberfläche aufweist und der aufnehmende Bereich der Haltestruktur (21a, 21b) komplementär dazu ausgebildet ist.

7. Betätigungsanordnung nach Anspruch 6, **dadurch gekennzeichnet, dass** der Zapfen (11) in einer Buchse (24) mit einer zumindest teilweise sphärische Oberfläche gelagert ist und der aufnehmende Bereich der Haltestruktur (21a, 21b) komplementär zur Oberfläche der Buchse (24) ausgebildet ist.

8. Betätigungsanordnung nach zumindest einem der vorhergehenden Ansprüche, mit einem doppelt-wirkenden Druckmittelzylinder, **dadurch gekennzeichnet, dass** zumindest zwei Leitungen (16) für das Druckmittel den Zapfen (11) im wesentlichen axial durchsetzen und auf zumindest einer Seite des Zapfens in zumindest je einen im wesentlichen radialen Kanal (17) übergehen, welcher in zumindest einer sich zumindest über einen Teil des Umfanges des Zapfens erstreckenden Nut (18) pro Leitung mündet.

9. Betätigungsanordnung nach Anspruch 8, **dadurch gekennzeichnet, dass** die Passage zu dem Arbeitsraum (6) des Druckmittelzylinders (1), der dem Zapfen (11) abgewandt liegt, durch das Innere des Druckmittelzylinders (1) geführt ist.

10. Betätigungsanordnung nach Anspruch 9, **dadurch gekennzeichnet, dass** der Druckmittelzylinder (1) als Doppelrohr-Zylinder ausgeführt und die Passage zu dem beitsraum (6) des Druckmittelzylinders, der dem Zapfen (11) abgewandt liegt, durch den ringförmigen Raum zwischen den beiden Rohren (7, 8) des Druckmittelzylinders (1) gebildet ist.

11. Betätigungsanordnung nach zumindest einem der vorhergehenden Ansprüche, **dadurch gekennzeichnet, dass** parallel zu dem oder jedem Druckmittelzylinder (1) zumindest ein weiteres Bauteil, vorzugsweise eine Gasfeder (2), angebracht ist, von welchem ein Ende mit dem Abschnitt (12) des Druckmittelzylinders (1) verbunden ist, der den Zapfen (11) umgreift, und das andere Ende mit der Kolbenstange (4) des Druckmittelzylinders (1) gekoppelt ist.

## Claims

1. An operating arrangement for movable parts on vehicles, particularly for boot or engine compartment covers, doors, convertible roofs and canopies, including at least one cylinder containing pressurising means that is pivotingly articulated with the vehicle and/or the movable part via a cylindrical journal and having at least one supply line for the pressurising means to at least one working chamber of the cylinder containing pressurising means, wherein a segment (16) of each supply line (13) for the pressurising means passes through the journal (11) essentially axially and on the side opposite the cylinder with pressurising means (1) passes into an essentially radial channel (17) that opens into at least one groove (18) that extends over at least a portion of the circumference of the journal (11), and wherein at least one passage extends from the journal (11) to at least one working chamber (6, 9) of the cylinder with pressurising means (1),
**characterised in that**
the journal (11) is attached in non-rotating manner to the cylinder with pressurising means (1) and the side (11a) of the journal (11) provided with at least one groove (18) is connectible with a connector for pressurising means (23) that encompasses the journal (11).

2. The operating arrangement according to claim 1,
**characterised in that**
at least one groove (18) extends over the entire circumference of the journal (11).

3. The operating arrangement according to claim 1 or 2,
**characterised in that**
the at least one groove (18) is conformed only in the journal (11).

4. The operating arrangement according to any of the preceding claims,
**characterised in that**
the journal (11) is supported and retained in a retaining structure (21, 21a, 21b, 22) to be movable about at least one freely selectable axis aligned at an angle to the axis of the journal (11).

5. The operating arrangement according to claim 4,
**characterised in that**
an elastomeric bearing (20) is inserted between the journal (11) and the retaining structure (21, 22).

6. The operating arrangement according to claim 4,
**characterised in that**
the section of the journal (11) that is seated in the retaining structure (21a, 21b) has an at least partly spherical surface and the seating zone of the
retaining structure (21a, 21b) is shaped to complement it.

7. The operating arrangement according to claim 6,
**characterised in that**
the journal (11) is supported in a socket (24) with an at least partly spherical surface and the seating zone of the retaining structure (21a, 21b) is shaped to complement the surface of the socket (24).

8. The operating arrangement according to any of the preceding claims, having a dual-action cylinder with pressurising means,
**characterised in that**
at least two supply lines (16) for the pressurising means pass essentially axially through the journal (11) and on at least one side of the journal each passes into an essentially radial channel (17) that opens into at least one groove (18) that extends over a portion of the circumference of the journal.

9. The operating arrangement according to claim 8,
**characterised in that**
the passage to the working chamber (6) of the cylinder with pressurising means (1) that is facing away from the journal (11) pass through the inside of the cylinder with pressurising means (1).

10. The operating arrangement according to claim 9,
**characterised in that**
the cylinder with pressurising means (1) is configured as a dual-action cylinder and the passage to the working chamber (6) of the cylinder with pressurising means that is facing away from the journal (11) is formed by the annular gap between the two pipes (7, 8) of the cylinder with pressurising means (1).

11. The operating arrangement according to at least one of the preceding claims,
**characterised in that**
at least one further component, preferably a gas spring (2), is attached parallel to each cylinder with pressurising means (1), and of which one end is connected to the portion (12) of the cylinder with pressurising means (1) that encompasses the journal (11), and the other end is coupled with the piston rod (4) of the cylinder with pressurising means (1).

## Revendications

1. Dispositif d'actionnement de pièces mobiles dans des véhicules, notamment pour un capot arrière ou un capot d'espace moteur, des portières, des capotes et des volets de capotes, comprenant au moins un vérin à fluide sous pression, qui est articulé de manière à pouvoir pivoter au moyen d'un embout cylindrique sur le véhicule et/ou sur la partie mobile et comportant au moins une canalisation pour le fluide sous pression dans au moins une chambre de travail du vérin à fluide sous pression, et dans lequel un tronçon (16) de chaque canalisation (13) pour le fluide sous pression traverse sensiblement axialement l'embout et se prolonge, sur le côté situé à l'opposé du vérin à fluide sous pression (1), dans au moins un canal sensiblement radial (17), qui débouche dans au moins une gorge (18) qui s'étend au moins sur une partie de la périphérie de l'embout (11), et dans lequel au moins un passage s'étend depuis l'embout (11) vers au moins une chambre de travail (6,9) du vérin à fluide sous pression (1), **caractérisé en ce que** l'embout (11) est relié solidairement en rotation au vérin à fluide sous pression (1) et que le côté (11a) de l'embout (11), qui est équipé d'au moins une gorge (18), peut être relié à une douille (23) de raccordement pour le fluide sous pression, qui entoure l'embout (11).

2. Dispositif d'actionnement selon la revendication 1, **caractérisé en ce que** la au moins une gorge (18) s'étend sur toute la périphérie de l'embout (11).

3. Dispositif d'actionnement selon la revendication 1 ou 2, **caractérisé en ce qu'**au moins une gorge (18) est formée uniquement dans l'embout (11).

4. Dispositif d'actionnement selon au moins l'une des revendications précédentes, **caractérisé en ce que** l'embout (11) est monté de manière mobile et est retenu dans une structure de retenue (21,21a,21b,22) autour d'au moins un axe quelconque orienté obliquement par rapport à l'axe de l'embout (11).

5. Dispositif d'actionnement selon la revendication 4, **caractérisé en ce qu'**un palier élastomère (20) est inséré entre l'embout (11) et la structure de retenue (21, 22).

6. Dispositif d'actionnement selon la revendication 4, **caractérisé en ce que** la partie de l'embout (11), qui est logée dans la structure de retenue (21a,21b), possède une surface au moins partiellement sphérique, et que la zone de réception de la structure de retenue (21a,21b) est agencée avec une forme complémentaire de cette surface.

7. Dispositif d'actionnement selon la revendication 6, **caractérisé en ce que** l'embout (11) est tourillonné dans un coussinet (24) comportant une surface au moins partiellement sphérique et que la zone de la partie de réception de la structure de retenue (21a,21b) est agencée avec une forme complémentaire de la surface du coussinet (24).

8. Dispositif d'actionnement selon au moins l'une des revendications précédentes, comportant un vérin à fluide sous pression à double effet, **caractérisé en ce qu'**au moins deux canalisations (16) pour le fluide sous pression traversent sensiblement radialement l'embout (11) et se prolongent, sur au moins un côté de l'embout, par un canal respectif sensiblement radial (17), qui débouche dans au moins une gorge (18) qui s'étend au moins sur une partie de la périphérie de l'embout, pour chaque canalisation.

9. Dispositif d'actionnement selon la revendication 8, **caractérisé en ce que** le passage aboutissant à la chambre de travail (6) du vérin à fluide sous pression (1), qui est située à l'opposé de l'embout (11), est guidé à l'intérieur du vérin (1) à fluide de travail.

10. Dispositif d'actionnement selon la revendication 9, **caractérisé en ce que** le vérin à fluide sous pression (1) est agencé sous la forme d'un vérin à double effet et que le passage aboutissant à la chambre de travail (6) du vérin à fluide sous pression, qui est située à l'opposé de l'embout (11), est formé par l'espace annulaire présent entre les deux tubes (7,8) du vérin à fluide sous pression (1).

11. Dispositif d'actionnement selon au moins l'une des revendications précédentes, **caractérisé en ce qu'**en parallèle avec le ou chaque vérin à fluide sous pression (1) est disposé au moins un autre composant, de préférence un ressort à gaz (2), dont une extrémité est reliée à la partie (12) du vérin à fluide sous pression (1), qui entoure l'embout (11), et que l'autre extrémité est couplée à la tige de piston (4) du vérin à fluide sous pression (1).
